# EUROPÄISCHE PATENTSCHRIFT

(11) **EP 2 627 539 B1**
(45) Veröffentlichungstag und Bekanntmachung des Hinweises auf die Patenterteilung: **14.12.2016**
(21) Anmeldenummer: 11722359.4
(22) Anmeldetag: 11.05.2011
(51) Int. Cl.: C09J 7/04, B60R 16/02

(54) **KLEBEBAND SOWIE AUS DEM KLEBEBAND HERGESTELLTE SCHLAUCHUMMANTELUNG**
ADHESIVE TAPE AND TUBE CASING PRODUCED FROM THE ADHESIVE TAPE
RUBAN ADHÉSIF ET ENVELOPPE TUBULAIRE PRODUITE À PARTIR DE CE RUBAN ADHÉSIF

(30) Priorität: 14.10.2010 DE 202010014239 U
(43) Veröffentlichungstag der Anmeldung: 21.08.2013
(73) Patentinhaber: certoplast Vorwerk & Sohn GmbH, 42285 Wuppertal (DE)
(72) Erfinder: MEIER, Thorsten, 40479 Düsseldorf (DE); TENBUSCH, Daniela, 46397 Bocholt (DE)
(74) Vertreter: Nunnenkamp, Jörg
(86) Internationale Anmeldenummer: PCT/EP2011/057620
(87) Internationale Veröffentlichungsnummer: WO 2012/048912

(56) Entgegenhaltungen:
- EP-A2- 1 203 800
- EP-A2- 1 367 608
- EP-B1- 1 448 744
- WO-A1-02/18509
- DE-A1- 2 052 271

## Beschreibung

Die Erfindung betrifft die Verwendung eines Klebebandes als Wickelband zur Bündelung von Kabeln in Automobilen, mit einem bandförmigen Träger, und mit zumindest einem wenigstens einseitig auf den Träger aufgebrachten Klebstoffstreifen, welcher zwischen 20% und 50% der Fläche der zugehörigen Trägerseite bedeckt.

Bei einer gattungsgemäßen Verwendung entsprechend der WO 02/18 509 A1 wird so vorgegangen, dass das fragliche Klebeband zum Ummanteln von lang gestrecktem Gut in einer spiralförmigen Bewegung um das fragliche Gut geführt wird. Dabei geht es insbesondere darum, eine einfache, preiswerte und schnelle Ummantelung zu ermöglichen. Das an dieser Stelle eingesetzte Trägermaterial kann durch herkömmliche Methoden, wie beispielsweise Nadelung, Vernähung bzw. Luft- und/oder Wasserstrahlbearbeitung, vorverfestigt werden. Auch eine zusätzliche Thermofixierung ist möglich.

Im Rahmen der EP 1 203 800 A2 wird ein Klebeband mit einer Vorderseite und einer Rückseite beschrieben, die von zwei Längskanten begrenzt sind. Auf der Vorderseite ist eine Klebeschicht vorgesehen. Außerdem verfügt die Vorderseite über wenigstens einen ersten Bereich, der frei von der Klebeschicht ist. Dadurch soll eine Ummantelung von Kabelsätzen einfacher und besser gelingen.

Ein Klebeband mit zumindest einem wenigstens einseitig auf den Träger aufgebrachten Klebstoffstreifen wird im weitesten Sinne auch in der DE 10 128 078 A1 beschrieben. Hier geht es um eine selbstklebende Dichtungsbahn, die auf dem Bausektor und insbesondere im Fassadenbereich eingesetzt wird. Diese verfügt über einen streifenförmigen sowie über die gesamte Dichtungsbahnlänge reichenden Dichtkleber, welcher auf einer ersten Kleberzone aufgebracht ist. Außerdem ist eine zweite Kleberzone realisiert. Auf diese Weise will man eine dauerhaft saubere und einfache Verlegung der Dichtungsbahn gewährleisten.

Daneben beschäftigt sich der Stand der Technik entsprechend beispielsweise der EP 1 448 744 B1 mit einem Klebeband, welches vorteilhaft als Wickelband zur Bündelung von Kabeln in Automobilen eingesetzt wird. Das bekannte Klebeband verfügt über eine ein- oder beidseitig auf den Träger aufgebrachte vollflächige Kleberbeschichtung. Ein den Träger nur teilweise bedeckender Klebstoffstreifen wird nicht angesprochen.

Der Stand der Technik hat sich grundsätzlich bewährt, was die beschriebenen Einsatzgebiete angeht. Allerdings besteht im Rahmen der Lehre nach der EP 1 448 744 B1 insofern Verbesserungsbedarf, als das bekannte Klebeband beim Herstellen einer wendelförmigen Umwicklung von Kabeln in Automobilen zumindest teilweise an den Kabeln haftet. Dadurch wird der gesamte umwickelte Kabelsatz hinsichtlich seiner Flexibilität beeinträchtigt, was in bestimmten Einsatzsituationen innerhalb eines Automobils nachteilig ist. Hier will die Erfindung insgesamt Abhilfe schaffen.

Der Erfindung liegt das technische Problem zugrunde, eine derartige Verwendung so weiterzuentwickeln, dass eine besonders flexible Umwicklung der zusammenzufassenden Kabel gelingt.

Zur Lösung dieser technischen Problemstellung ist eine gattungsgemäße Verwendung im Rahmen der Erfindung dadurch gekennzeichnet, dass der Träger eine beidseitig glatt geschliffene Oberfläche aufweist und der Klebstoffstreifen durch eine teilweise Beschichtung des Trägers mit einer Maske beim Klebstoffauftrag hergestellt wird.

Dabei hat es sich weiter als günstig erwiesen, wenn der Klebstoffstreifen in Längsrichtung und randseitig des Trägers angeordnet ist. Denn dadurch lässt sich der Klebstoffstreifen besonders einfach auf den Träger aufbringen, nämlich beginnend an einem Rand des Trägers und in Richtung auf die Mitte des Trägers. Das kann durch ein entsprechend gestaltetes Aufrakeln oder andere Beschichtungsmethoden erfolgen. Grundsätzlich kann der Klebstoffstreifen aber auch von beiden Rändern des Trägers beabstandet sein und mehr oder minder mittig des Trägers verlaufen. Im Allgemeinen wird jedoch eine Anordnung des Klebstoffstreifens an einem Rand des Trägers aus den nachfolgend noch zu schildernden Gründen präferiert.

Des Weiteren hat es sich als vorteilhaft erwiesen, wenn zwei Klebstoffstreifen vorgesehen sind. Dabei arbeitet man meistens derart, dass ein Klebstoffstreifen der beiden Klebstoffstreifen auf der Trägeroberseite angebracht bzw. definiert wird. Demgegenüber findet sich der andere der beiden Klebstoffstreifen auf der Trägerunterseite. Hier besteht nun die Möglichkeit, die beiden Klebstoffstreifen an einem übereinstimmenden Trägerrand anzuordnen. Im Querschnitt des Klebebandes überdecken sich folglich die beiden Klebstoffstreifen.

Im Rahmen einer besonders vorteilhaften Variante liegen die beiden Klebstoffstreifen jedoch an den sich gegenüberliegenden Trägerrändern an. In diesem Fall findet im Querschnitt des Klebebandes keine Überdeckung zwischen den beiden Klebstoffstreifen statt. Vielmehr schließen die beiden an den sich gegenüberliegenden Trägerrändern und auf unterschiedlichen Trägerseiten angeordneten Klebstoffstreifen im Querschnitt des Klebebandes einen Freibereich des Trägers zwischen sich ein. Dieser Freibereich des Trägers ist klebstofffrei gestaltet. Außerdem verfügt der Freibereich vorteilhaft über eine spiegelsymmetrische Ausgestaltung, nämlich im Vergleich zu einer Bandlängsachse.

Die beiden Klebstoffstreifen am übereinstimmenden Trägerrand bzw. den sich gegenüberliegenden Trägerrändern verfügen regelmäßig über eine übereinstimmende Breite. Außerdem sind sie vorteilhaft aus einer gleichen Klebstoffmasse hergestellt und besitzen damit gleiche oder vergleichbare Hafteigenschaften.

Bei dem Träger handelt es sich erfindungsgemäß um einen Gewebeträger, wenngleich grundsätzlich auch andere Träger, beispielsweise ein Vlies oder vergleichbare Flächengebilde aus Fasern und insbesondere Kunststofffasern, zum Einsatz kommen können. In jedem Fall verfügt der Träger über eine beidseitig glattgeschliffene Oberfläche. Meistens sind sowohl die Trägeroberseite als auch die Trägerunterseite jeweils vollflächig glattgeschliffen ausgelegt und verfügen über eine durchgängig glattgeschliffene Oberfläche. Die glattgeschliffene Oberfläche mag gechinzt sein, wie dies im Rahmen der einleitend bereits genannten EP 1 448 744 B1 im Detail erläutert wird.

Auf diese Weise wird eine verdichtete Bandoberfläche bzw. Trägeroberfläche beobachtet, die besonders schmutzabweisend ausgelegt ist. Durch den Rückgriff auf einen Gewebeträger und insbesondere Polyestergewebeträger wird zudem eine hervorragende Medienbeständigkeit gegenüber beispielsweise Öl, Benzin etc. beobachtet, was für den speziellen Einsatzzweck zur Bündelung von Kabeln in Automobilen und beispielsweise im Motorraum von besonderer Bedeutung ist. Darüber hinaus lassen sich Klebebänder mit derartigen Gewebeträgern relativ problemlos von Hand einreißen, was für den beschriebenen Einsatzzweck und die Verarbeitung als Wickelband zur Bündelung von Kabeln in Automobilen ebenfalls von besonderer Bedeutung ist.

Außerdem zeichnen sich derartige Träger auf Basis eines Polyestergewebes durch hohe Verrottungsbeständigkeit und Halogen- sowie Weichmacherfreiheit aus. Darüber hinaus sind derartige Polyestergewebeträger abriebfest und reißstabil aber dennoch schmiegsam und flexibel. Hieraus hergestellte Klebebänder lassen sich typischerweise im für automobile Anwendungen besonders relevanten Temperaturbereich von -40°C bis zu +125°C einsetzen. Durch die speziell konzipierte glattgeschliffene Bandoberfläche bzw. Trägeroberfläche erhält man einen schmutzabweisenden und dauerhaft flexiblen Kabelstrang, sofern das Klebeband als Wickelband zur Bündelung derartiger Kabel eingesetzt wird. Außerdem ist der solchermaßen gebündelte Kabelstrang sehr gut gegen äußere mechanische Beanspruchungen, wie z.B. scharfe Kanten im Innern eines Automobils, geschützt. Durch die hohe Temperaturbeständigkeit des robusten Trägermaterials und aufgrund der ausgezeichneten Medienbeständigkeit eignet sich das beschriebene Klebeband insbesondere für die beschriebenen automobilen Anwendungen, und zwar im gesamten Fahrzeug.

Hierzu trägt ergänzend der Umstand bei, dass der eine oder die mehreren Klebstoffstreifen aus einem Schmelzklebstoff auf vorzugsweise Kautschukbasis hergestellt werden. Tatsächlich hat sich der Einsatz von Synthesekautschuk als besonders günstig erwiesen. Denn es werden hohe Klebekräfte beobachtet.

Im Ergebnis wird ein Klebeband zur Verfügung gestellt, mit dessen Hilfe typischerweise Objekte wie Kabel in Automobilen problemlos und flexibel gebündelt werden können. Die auf diese Weise hergestellten Kabelsätze zeichnen sich durch eine leichte Verlegung und hohe Flexibilität auch nach Anbringung der Umwicklung mit dem erfindungsgemäßen Klebeband aus.

Beschrieben ist auch eine Schlauchummantelung, welche insbesondere zur Bündelung von Kabeln in Automobilen eingesetzt wird. Diese Schlauchummantelung besteht im Wesentlich aus einem wendelförmig um die Kabel herumgeführten sowie miteinander verklebten Klebeband, wie es zuvor beschrieben wurde. Bei der Herstellung der erfindungsgemäßen Schlauchummantelung wird das Klebeband mittels des einen oder der mehreren Klebestreifen jeweils in einem Überlappungsbereich zwischen der Oberseite einer ersten Wendel und der Unterseite einer zweiten benachbarten Wendel verklebt. Das heißt, das Klebeband wird wendelförmig um die zu bündelnden Kabel herumgeführt. Dabei erfolgt eine Verklebung des Klebebandes lediglich im Überlappungsbereich der jeweils benachbarten Wendel, und zwar zwischen der Oberseite der ersten Wendel und der Unterseite der zweiten benachbarten Wendel. Dadurch wird das Klebeband gleichsam mit sich selbst verklebt und nicht, jedenfalls nicht primär, mit den zu bündelnden Kabeln bzw. allgemein den zu bündelnden Objekten.

Tatsächlich wird man in diesem Zusammenhang die Auslegung meistens so treffen, dass der eine Klebestreifen oder die mehreren Klebestreifen im Überlappungsbereich zwischen einem hinteren Rand der ersten Wendel und einem vorderen Rand der zweiten benachbarten Wendel angeordnet ist bzw. angeordnet sind. Der vordere und der hintere Rand der jeweiligen Wendel ergeben sich durch einen Vergleich mit der Wendelrichtung. Auf diese Weise ist die Innenseite des Klebebandes, die dem Kabel jeweils zugewandt ist, überwiegend klebstofffrei gestaltet. Das gilt jedenfalls bis auf einen etwaigen Anfangsbereich des Klebebandes, welcher zur Fixierung der auf diese Weise hergestellten Schlauchummantelung an den mehreren Kabeln genutzt wird oder werden kann.

Insgesamt zeichnet sich das Klebeband im Kern dadurch aus, dass der auf den Träger aufgebrachte Klebstoffstreifen den Träger maximal bis zur Hälfte bedeckt. Das heißt, der Klebstoffstreifen folgt der Längsrichtung des Trägers und nimmt maximal die Hälfte der Trägeroberfläche ein. Das können entweder die Trägeroberseite oder die Trägerunterseite oder beide Trägerseiten sein. Dabei ist der jeweilige Klebstoffstreifen an einem Rand der Trägeroberseite und/oder der Trägerunterseite angeordnet. Das heißt, der Klebstoffstreifen erstreckt sich von dem fraglichen Trägerrand an der Trägeroberseite und/oder Trägerunterseite in Richtung auf eine Trägermitte. Im Maximum reicht der Klebstoffstreifen von einem Trägerrand bis zur Trägermitte. bzw. der dortigen Bandlängsachse

Auf diese Weise lässt sich besonders vorteilhaft die beschriebene Schlauchummantelung realisieren, weil durch das wendelförmig um die Kabel herumgeführte Klebeband ein Überlappungsbereich zwischen der Oberseite der ersten Wendel und der Unterseite der zweiten benachbarten Wendel für die erforderliche Haftung sorgt. Tatsächlich ist der eine oder sind die beiden Klebestreifen lediglich in diesem Überlappungsbereich angeordnet, so dass die dem Kabel jeweils zugewandte Innenseite des Klebebandes überwiegend klebstofffrei gestaltet ist. Lediglich ein etwaiger Anfangsbereich des Klebebandes mag mit dem dort vorgesehenen Klebstoffstreifen für eine Anfangsfixierung an den zu bündelnden Kabel sorgen. Das ist allerdings nicht zwingend.

Jedenfalls gewährleistet die Erfindung, dass das Klebeband bei dem beschriebenen Einsatzzweck nicht auf den zu bündelnden Kabeln bzw. dem Kabelbaum klebt oder an diesem anhaftet. Vielmehr lässt sich die solchermaßen realisierte Schlauchummantelung gegenüber den zu bündelnden Kabeln respektive dem Kabelbaum verschieben. Dadurch verfügt der Kabelbaum bzw. der auf diese Weise realisierte Kabelsatz über eine Flexibilität, die bisher so nicht erreicht werden konnte.

Das gilt für den Fall, dass nur mit einem Klebstoffstreifen gearbeitet wird, welcher im Überlappungsbereich für die gegenseitige Haftung zwischen den beiden benachbarten Wendeln sorgt. Für eine noch bessere Haftung in diesem Überlappungsbereich wird jedoch meistens mit den beiden zueinander versetzten Klebstoffstreifen gearbeitet, und zwar indem die Klebstoffstreifen an den sich gegenüberliegenden Trägerrändern und auf unterschiedlichen Trägerseiten angeordnet werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: ein Klebeband in einer ersten Ausführungsform,
- Fig. 2: das Klebeband in einer abgewandelten Ausgestaltung im Schnitt,
- Fig. 3: eine mit Hilfe des Klebebandes nach Fig. 1 hergestellte Schlauchummantelung und
- Fig. 4: eine Schlauchummantelung entsprechend der Fig. 3, hergestellt mit Hilfe eines Klebebandes nach Fig. 2.

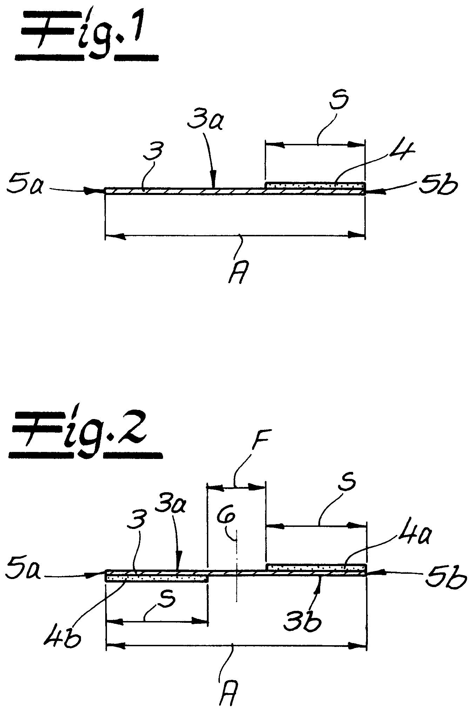

In den Fig. 1 und 2 ist ein Klebeband dargestellt, welches vorliegend als Wickelband zur Bündelung von Kabeln 1 in Automobilen eingesetzt wird. Bei den Kabeln 1 mag es sich um übliche isolierte Kabel 1 handeln, die typischerweise und überwiegend in Längserstreckung zueinander verlaufen und zusammengefasst werden. Die Kabel 1 formen insgesamt einen Kabelbaum 2. Mit Hilfe des in den Fig. 1 und 2 dargestellten Klebebandes werden nun die Kabel 1 gebündelt bzw. erfährt der Kabelbaum 2 eine Zusammenfassung dergestalt, dass nach Anbringung des Klebebandes ein einbaufertiger Kabelsatz zur Verlegung in einem Automobil zur Verfügung steht.

Das Klebeband verfügt in seinem grundsätzlichen Aufbau über einen Träger 3 und wenigstens einen auf den Träger 3 aufgebrachten Klebstoffstreifen 4. Im Rahmen der Variante nach Fig. 1 ist der Klebstoffstreifen 4 einseitig auf den Träger 3 aufgebracht, und zwar auf seine Trägeroberseite 3a. Bei dem Ausführungsbeispiel nach Fig. 2 verfügt der Träger 3 beidseitig über einen zugehörigen Klebstoffstreifen 4. Tatsächlich ist an dieser Stelle ein Klebstoffstreifen 4 auf der Trägeroberseite 3a und ein weiterer Klebstoffstreifen 4 auf der Trägerunterseite 3b vorgesehen. Zur Unterscheidung der beiden Klebstoffstreifen 4 wird der Klebstoffstreifen 4 auf der Trägeroberseite 3a nachfolgend als Klebstoffstreifen 4a bezeichnet, wohingegen der Klebstoffstreifen 4 auf der Trägerunterseite 3b das Bezugszeichen 4b trägt.

Erfindungsgemäß nimmt der Klebstoffstreifen 4 bzw. 4a, 4b zwischen 20 % und 50 % der (Gesamt-) Fläche der zugehörigen Trägerseite 3a, 3b ein. Im Rahmen des gezeigten Beispiels nach den Fig. 1 und 2 verfügt der Träger 3 beispielhaft und nicht einschränkend über eine Gesamtbreite A von ca. 20 mm. Der Klebstoffstreifen 4 an der Trägeroberseite 3a mag eine Breite S von ca. 8 mm aufweisen. Auf diese Weise ist ein Klebstoffstreifen 4 realisiert, der im Beispielfall ca. 40 % der Fläche der zugehörigen Trägerseite bzw. der Trägeroberseite 3a bedeckt.

Im Beispielfall nach der Fig. 2 sind zwei Klebstoffstreifen 4 bzw. der Klebstoffstreifen 4a an der Trägeroberseite 3a und der Klebstoffstreifen 4b an der Trägerunterseite 3b realisiert, die ebenfalls über die bereits genannte Breite S von 8 mm im Vergleich zur Gesamtbreite A von 20 mm des Trägers 3 verfügen. Die Klebstoffstreifen 4; 4a, 4b sind jeweils in Längsrichtung und randseitig des Trägers 3 angeordnet. Das heißt, der Klebstoffstreifen 4; 4a, 4b erstreckt sich jeweils vom Trägerrand 5a, 5b in Richtung auf eine Trägermitte 6. Die Trägermitte 6 definiert wegen des bandförmigen bzw. rechteckigen Charakters des Trägers 3 zugleich eine Bandlängsachse 6. Die Bandlängsachse 6 stellt die Spiegelsymmetrieachse des Klebebandes im Ganzen dar.

Im Rahmen des gezeigten Ausführungsbeispiels nach Fig. 2 können grundsätzlich die beiden dortigen Klebstoffstreifen 4a, 4b an einem übereinstimmenden Trägerrand 5a respektive 5b anliegen. Typischerweise sind die beiden Klebstoffstreifen 4a, 4b jedoch an den sich gegenüberliegenden Trägerrändern 5a, 5b des Trägers 3 wie dargestellt angeordnet. Außerdem besitzen die beiden Klebstoffstreifen 4a, 4b eine im Wesentlichen übereinstimmende Breite S, die im Ausführungsbeispiel ca. 40 % der Fläche der zugehörigen Trägerseite 3a, 3b bedeckt. Die beiden Klebstoffstreifen 4a, 4b sind aus einer übereinstimmenden Klebstoffmasse hergestellt. Tatsächlich hat sich an dieser Stelle ebenso wie zur Realisierung des Klebstoffstreifens 4 nach der Fig. 1 ein Schmelzklebstoff auf vorzugsweise Kautschukbasis als besonders günstig erwiesen. Im Rahmen des Beispielfalls handelt es sich um eine Beschichtung aus einem Synthesekautschukkleber.

Die beiden an den sich gegenüberliegenden Trägerrändern 5a, 5b des Trägers 3 und auf unterschiedlichen Trägerseiten 3a, 3b angeordneten Klebstoffstreifen 4a, 4b schließen im Querschnitt einen Freibereich F des Trägers 3 zwischen sich ein. Tatsächlich macht die Schnittdarstellung nach Fig. 2 deutlich, dass die beiden Klebstoffstreifen 4a, 4b im Querschnitt keinen Überlapp zueinander aufweisen, sondern versetzt zueinander angeordnet sind.

Denn die beiden Klebstoffstreifen 4a, 4b liegen an den sich gegenüberliegenden Trägerrändern 5a, 5b an und erstrecken sich von dort aus in Richtung auf die Trägermitte bzw. Bandlängsachse 6. Da beide Klebstoffstreifen 4a, 4b eine jeweilige Breite S von weniger als 50 % Überdeckung im Vergleich zur Fläche der zugehörigen Trägerseite 3a, 3b aufweisen, erklärt sich, dass zwischen den beiden Klebstoffstreifen 4a, 4b der bereits beschriebene und klebstofffreie Freibereich F definiert wird. Dieser verfügt im Beispielfall nach der Fig. 2 über eine Breite von ca. 20 % im Vergleich zur Fläche der Trägeroberseite 3a sowie der Fläche der Trägerunterseite 3b. Das liegt daran, dass die jeweiligen Klebstoffstreifen 4a, 4b jeweils 40 % der Fläche der zugehörigen Trägerseite 3a bzw. 3b einnehmen und folglich in der Summe und in Überdeckung 80 % des Trägers 3 bedecken. Der Freibereich F ist symmetrisch zu der Bandlängsachse 6 ausgebildet und seinerseits als Freibereichsstreifen ausgelegt.

Bei dem Träger 3 handelt es sich um einen Gewebeträger und im Rahmen des Ausführungsbeispiels um ein glattgeschliffenes Polyestergewebe. Dieses verfügt typischerweise über eine Banddicke von ca. 0,2 mm. Die Reißkraft des hiermit hergestellten Klebebandes ist im Bereich von ca. 70 N/cm und mehr angesiedelt. Die Reißdehnung beträgt ca. 10 % und mehr. Außerdem wird eine Klebkraft auf Stahl von mehr als 4 N/cm beobachtet. Infolge der eingesetzten Materialien wird ein abdeckbarer Temperaturbereich von ca. -40°C bis ca. +125°C beobachtet, so dass das Klebeband für die zuvor bereits beschriebenen automobilen Anwendungen prädestiniert ist.

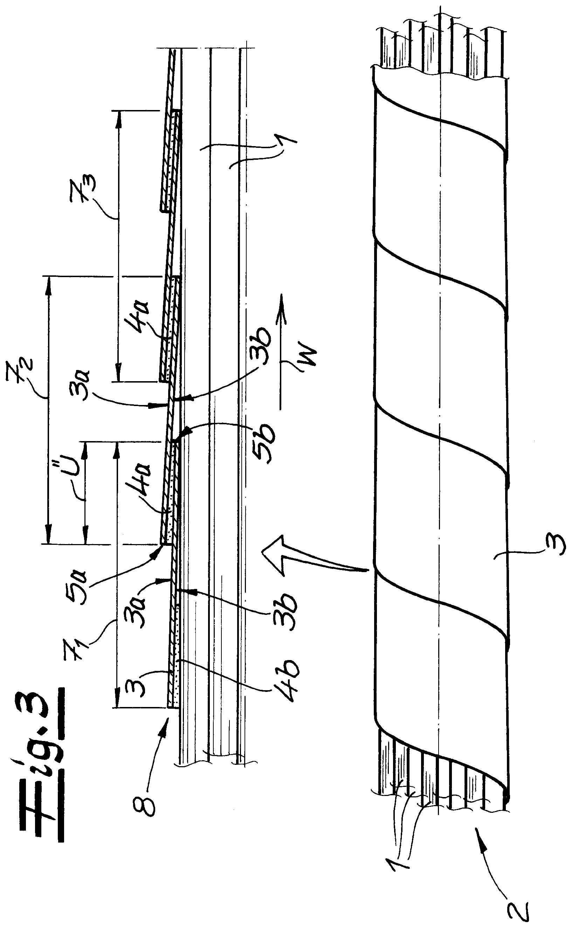

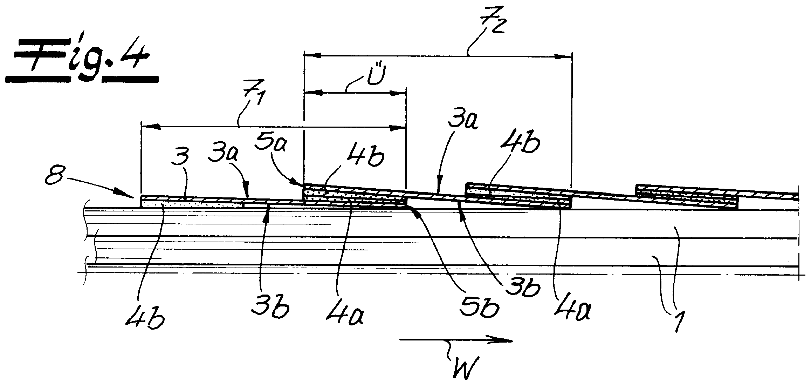

Die Figuren 3 und 4 zeigen nun eine Schlauchummantelung, die mit Hilfe des Klebebandes nach den Fig. 1 und 2 hergestellt worden ist und zur Bündelung der Kabel 1 bzw. Ummantelung des Kabelbaumes 2 und Herstellung des bereits angesprochenen Kabelsatzes dient. Dabei besteht die Schlauchummantelung im Wesentlichen aus dem Klebeband nach Fig. 1 bzw. entsprechend der Fig. 2, welches wendelförmig um die fraglichen Kabel 1 herumgeführt wird. Bei diesem Vorgang wird das Klebeband mit sich selbst verklebt bzw. erfahren die einzelnen und zueinander benachbarten Wendel 7₁, 7₂, 7₃ usw. eine Verklebung untereinander. Dies wird im Einzelnen im Detail beschrieben.

Tatsächlich zeigt zunächst die Darstellung nach der Fig. 3 eine Schlauchummantelung, die mit Hilfe des Klebebandes entsprechend der Fig. 1 realisiert worden ist. Man erkennt, dass das fragliche Klebeband mittels des jeweils auf der Trägeroberseite 3a angeordneten Klebestreifens 4a jeweils in einem Überlappungsbereich Ü zwischen der Oberseite 3a einer ersten Wendel 7₁ und der Unterseite 3b einer zweiten benachbarten Wendel 7₂ verklebt ist. Der Überlappungsbereich Ü wird seinerseits begrenzt durch den in Wendelrichtung W hinteren Rand 5b des Trägers 3 der ersten Wendel 7₁. Den anderen Rand des Überlappungsbereiches Ü stellt demgegenüber der vordere Rand 5a des Trägers 3 der benachbarten zweiten Wendel 7₂ dar.

Das Klebeband ist nun lediglich in diesem Überlappungsbereich Ü miteinander verklebt, und zwar zwischen der Oberseite 3a der ersten Wendel 7₁ und der Unterseite 3b der zweiten benachbarten Wendel 7₂. Auf diese Weise ist die Innenseite des Klebebandes bzw. der solchermaßen gebildeten Schlauchummantelung überwiegend klebstofffrei gestaltet. Denn die Innenseite der Schlauchummantelung wird von der jeweiligen Unterseite 3b des Trägers 3 der einzelnen Wendeln 7₁, 7₂, 7₃ usw. gebildet, die - bis auf einen Anfangsbereich 8 - klebstofffrei gestaltet ist.

Tatsächlich beobachtet man lediglich im Anfangsbereich 8 einen Klebstoffstreifen 4b an der Unterseite 3b des Trägers 3, der nicht von einer vorauseilenden Wendel bzw. der Oberseite 3a einer benachbarten und voreilenden Wendel stammt. Folglich kann der Klebestreifen 4b im Anfangsbereich 8 zur geringfügigen oder temporären Anfangsfixierung der gebildeten Schlauchummantelung eingesetzt werden.

Eine ähnliche Funktionalität und vergleichbare Eigenschaften werden für den Fall beobachtet, dass das Klebeband nach Fig. 2 zur Darstellung einer Schlauchummantelung entsprechend der Fig. 4 Verwendung findet. Tatsächlich sind in diesem Fall zwei Klebestreifen 4a, 4b im Überlappungsbereich Ü zwischen dem hinteren Rand 5b der ersten Wendel 7₁ und dem vorderen Rand 5a der benachbarten zweiten Wendel 7₂ vorgesehen. Die beiden Klebestreifen 4a, 4b resultieren daher, dass das Klebeband entsprechend der Fig. 2 zur Darstellung der Schutzummantelung nach Fig. 4 an den sich gegenüberliegenden Trägerrändern 5a, 5b des Trägers 3 mit den auf unterschiedlichen Trägerseiten 3a, 3b angeordneten Klebstoffstreifen 4a, 4b ausgerüstet ist.

Tatsächlich verfügt das Klebeband nach der Fig. 2 über die bereits angesprochenen versetzten Klebstoffstreifen 4a, 4b. Dabei ist der Klebstoffstreifen 4a auf der Oberseite 3a des Trägers 3 an der in Wendelrichtung W hinteren Kante 5b des Trägers 3 angeordnet. Demgegenüber findet sich der Klebestreifen 4b an der in Wendelrichtung W vorderen Kante 5a des Trägers 3, und zwar auf der Unterseite 3b.

Im Zuge der wendelförmigen Umwicklung der Kabel 1 bzw. des Kabelbaumes 2 treffen nun die beiden Klebestreifen 4a, 4b wie beschrieben aufeinander und können aneinander haften. Da beide Klebstoffstreifen 4a, 4b eine übereinstimmende Breite S aufweisen, wird eine besonders innige Haftung zur Verfügung gestellt. Außerdem ist die Schlauchummantelung nach der Fig. 4 erneut so ausgelegt, dass die beiden Klebestreifen 4a, 4b auf den Überlappungsbereich Ü hinsichtlich ihrer Ausdehnung beschränkt sind. Dadurch ist die den Kabeln 1 bzw. dem Kabelbaum 2 jeweils zugewandte Innenseite 3b des Klebebandes erneut klebstofffrei gestaltet, und zwar bis auf einen wiederum realisierten etwaigen Anfangsbereich 8, an dem sich ein unabgedeckter Klebstoffstreifen 4b auf der Unterseite 3b der ersten Wendel 7₁ des Klebebandes findet, welcher zur Anfangsfixierung der solchermaßen realisierten Schlauchummantelung dienen mag.

In beiden Fällen lässt sich die Schlauchummantelung entsprechend den Fig. 3 und 4 prinzipiell in Längsrichtung bzw. Wendelrichtung W und entgegengesetzt hierzu im Vergleich zu den Kabeln 1 bzw. dem Kabelbaum 2 verschieben. Dadurch wird eine außerordentlich große Flexibilität des auf diese Weise realisierten Kabelsatzes erreicht.

Die Herstellung des Klebebandes erfolgt typischerweise derart, dass der Träger 3 aus einem Bandmaterial (meistens in Längsrichtung) herausgeschnitten wird bzw. mehrere Träger 3 gleichzeitig in Längserstreckung hierdurch definiert werden. Gleichzeitig oder im Anschluss hieran wird der Klebstoffstreifen 4 aufgebracht. Dabei kann so vorgegangen werden, dass zunächst der Klebstoffstreifen 4a auf der Trägeroberseite 3a und anschließend der Klebstoffstreifen 4b auf der Trägerunterseite 3b definiert wird. Im Regelfall wird man beide Klebstoffstreifen 4a, 4b gleichzeitig auf den Träger 3 aufbringen.

Um die teilweise Beschichtung des Trägers 3 bzw. der Trägeroberseite 3a respektive der Trägerunterseite 3b zu erreichen, wird erfindungsgemäß mit einer Maske beim Klebstoffauftrag gearbeitet.

## Patentansprüche

1. Verwendung eines Klebebandes als Wickelband zur Bündelung von Kabeln (1) in Automobilen, mit einem bandförmigen Träger (3), ausgebildet als Gewebeträger und mit zumindest
einem wenigstens einseitig auf den Träger (3) aufgebrachten Klebstoffstreifen (4; 4a, 4b), welcher zwischen 20% und 50% der Fläche der zugehörigen Trägerseite (3a, 3b) bedeckt, **dadurch gekennzeichnet, dass** der Träger (3) eine beidseitig glatt geschliffene Oberfläche aufweist und der Klebstoffstreifen (4; 4a, 4b) durch eine teilweise Beschichtung des glattgeschliffenen Trägers (3) mit einer Maske beim Klebstoffauftrag hergestellt wird.

2. Verwendung nach Anspruch 1, **dadurch gekennzeichnet, dass** der Klebstoffstreifen (4a, 4b) zwischen 30 % und 40 % der Fläche der Trägerseite (3a, 3b) einnimmt.

3. Verwendung nach Anspruch 1 oder 2, **dadurch gekennzeich**n e t , dass der Klebstoffstreifen (4; 4a, 4b) in Längsrichtung und randseitig des Trägers (3) angeordnet ist.

4. Verwendung nach einem der Ansprüche 1 bis 3, **dadurch gekennzeichnet, dass** zwei Klebstoffstreifen (4a, 4b) vorgesehen sind, und zwar ein Klebstoffstreifen (4a) auf der Trägeroberseite (3a) und ein Klebstoffstreifen (4b) auf der Trägerunterseite (3b) des Trägers (3).

5. Verwendung nach Anspruch 4, **dadurch gekennzeichnet, dass** die beiden Klebstoffstreifen (4a, 4b) an einem übereinstimmenden Trägerrand (5a; 5b) anliegen.

6. Verwendung nach Anspruch 4, **dadurch gekennzeichnet, dass** die beiden Klebstoffstreifen (4a, 4b) an sich gegenüberliegenden Trägerrändern (5a, 5b) anliegen.

7. Verwendung nach einem der Ansprüche 4 bis 6, **dadurch gekennzeichnet, dass** die beiden Klebstoffstreifen (4a, 4b) eine übereinstimmende Breite (S) aufweisen.

8. Verwendung nach einem der Ansprüche 4 bis 7, **dadurch gekennzeichnet, dass** die beiden Klebstoffstreifen (4a, 4b) aus einer übereinstimmenden Klebstoffmasse hergestellt sind.

9. Verwendung nach einem der Ansprüche 4 oder 6 bis 8, **dadurch gekennzeichnet, dass** die beiden an sich gegenüberliegenden Trägerrändern (5a, 5b) auf unterschiedlichen Trägerseiten (3a, 3b) angeordneten Klebstoffstreifen (4a, 4b) im Querschnitt einen Freibereich (F) des Trägers (3) zwischen sich einschließen, welcher vorzugsweise symmetrisch zu einer Bandlängsachse (6) ausgebildet ist.

10. Verwendung nach einem der Ansprüche 1 bis 9, **dadurch**
**gekennzeichnet, dass** der Klebstoffstreifen (4; 4a, 4b) aus einem Schmelzklebstoff auf vorzugsweise Kautschukbasis hergestellt ist.

11. Verwendung nach einem der Ansprüche 1 bis 10, **dadurch**
**gekennzeichnet, dass** eine Schlauchummantelung bestehend im Wesentlichen aus einem wendelförmig um die Kabel (1) herumgeführten sowie miteinander verklebten Klebeband hergestellt wird.

12. Verwendung nach Anspruch 11, **dadurch gekennzeichnet,**
**dass** das Klebeband mittels des Klebstoffstreifens (4a, 4b) jeweils in einem Überlappungsbereich (Ü) zwischen der Oberseite (3a) einer ersten Wendel (7₁) und der Unterseite (3b) einer zweiten benachbarten Wendel (7₂) verklebt ist.

13. Verwendung nach Anspruch 11 oder 12, **dadurch gekennzeichnet, dass** der Klebstoffstreifen (4a, 4b) im Überlappungsbereich (Ü) zwischen einem hinteren Rand (5b) der ersten Wendel (7₁) und einem vorderen Rand (5a) der zweiten benachbarten Wendel (7₂) angeordnet ist, so dass die den Kabeln (1) jeweils zugewandte Innenseite des Klebebandes überwiegend klebstofffrei gestaltet ist.

## Claims

1. Use of an adhesive tape as a wrapping tape for bundling cables (1) in automobiles, having a tape-shaped carrier (3) designed as a fabric carrier, and at least one adhesive strip (4; 4a, 4b) which is applied to at least one side of the carrier (3) and covers between 20% and 50% of the area of the associated carrier side (3a, 3b), **characterized in that** the carrier (3) has a smoothly polished surface on both sides and the adhesive strip (4; 4a, 4b) is produced by a partial coating of the smoothly polished carrier (3) with a mask during the application of the adhesive.

2. Use according to Claim 1, **characterized in that** the adhesive strip (4a, 4b) incorporates between 30% and 40% of the area of the carrier side (3a, 3b).

3. Use according to Claim 1 or 2, **characterized in that** the adhesive strip (4; 4a, 4b) is arranged in the longitudinal direction and along the edge of the carrier (3).

4. Use according to any one of Claims 1 to 3, **characterized in that** two adhesive strips (4a, 4b) are provided, namely one adhesive strip (4a) on the carrier upper side (3a) and one adhesive strip (4b) on the carrier lower side (3b) of the carrier (3).

5. Use according to Claim 4, **characterized in that** both the adhesive strips (4a, 4b) abut against an identical carrier edge (5a; 5b).

6. Use according to Claim 4, **characterized in that** both the adhesive strips (4a, 4b) abut against opposite carrier edges (5a; 5b).

7. Use according to any one of Claims 4 to 6, **characterized in that** both the adhesive strips (4a, 4b) have an identical width (S).

8. Use according to any one of Claims 4 to 7, **characterized in that** both the adhesive strips (4a, 4b) are formed from an identical adhesive compound.

9. Use according to any one of Claims 4 or 6 to 8, **characterized in that** both the adhesive strips (4a, 4b) arranged on opposite carrier edges (5a, 5b) on different carrier sides (3a, 3b) in cross-section enclose between them a free region (F) of the carrier (3), which region is preferably configured symmetrically with respect to a longitudinal axis (6) of the tape.

10. Use according to any one of Claims 1 to 9, **characterized in that** the adhesive strip (4; 4a, 4b) is produced from a melting adhesive preferably based on rubber.

11. Use according to any one of Claims 1 to 10, **characterized in that** a hose jacket is produced, consisting substantially of an adhesive tape which is wound helically around the cables (1) and bonded together.

12. Use according to Claim 11, **characterized in that** the adhesive tape is bonded by means of the adhesive strip (4a, 4b) in each case in an overlapping region (U) between the upper side (3a) of a first helix (7₁) and the underside (3b) of a second adjacent helix (7₂).

13. Use according to Claim 11 or 12, **characterized in that** the adhesive strip (4a, 4b) is arranged in the overlapping region (U) between a rear edge (5b) of the first helix (7₁) and a front edge (5a) of the second adjacent helix (7₂), so that each inner side of the adhesive tape facing the cables (1) is formed predominantly free of adhesive.

## Revendications

1. Utilisation d'une bande adhésive comme bande d'enroulement pour la mise en faisceau de câbles (1) dans des automobiles, avec un support (3) en forme de bande, constitué comme support en tissu et avec au moins un ruban de colle (4 ; 4a, 4b) appliqué au moins d'un côté sur le support (3), lequel couvre entre 20% et 50% de la surface du côté de support (3a, 3b) correspondant, **caractérisée en ce que** le support (3) comporte une surface polie lisse des deux côtés et le ruban de colle (4 ; 4a, 4b) est fabriqué par une enduction partielle du support rectifié lisse (3) avec un masque lors de l'application de la colle.

2. Utilisation selon la revendication 1, **caractérisée en ce que** le ruban de colle (4a, 4b) occupe entre 30% et 40% de la surface du côté de support (3a, 3b).

3. Utilisation selon la revendication 1 ou 2, **caractérisée en ce que** le ruban de colle (4 ; 4a, 4b) est disposé dans le sens longitudinal et au bord du support (3).

4. Utilisation selon l'une quelconque des revendications 1 à 3, **caractérisée en ce que** deux rubans de colle (4a, 4b) sont prévus et à vrai dire un ruban de colle (4a) sur le côté supérieur de support (3a) et un ruban de colle (4b) sur le côté inférieur de support (3b) du support (3).

5. Utilisation selon la revendication 4, **caractérisée en ce que** les deux rubans de colle (4a, 4b) adhèrent à un bord de support (5a, 5b) correspondant.

6. Utilisation selon la revendication 4, **caractérisée en ce que** les deux rubans de colle (4a, 4b) adhèrent aux bords de support (5a, 5b) s'opposant.

7. Utilisation selon l'une quelconque des revendications 4 à 6, **caractérisée en ce que** les deux rubans de colle (4a, 4b) comportent une largeur (S) coïncidente.

8. Utilisation selon l'une quelconque des revendications 4 à 7, **caractérisée en ce que** les deux rubans de colle (4a, 4b) sont élaborés à partir d'une masse de colle coïncidente.

9. Utilisation selon l'une quelconque des revendications 4 ou 6 à 8, **caractérisée en ce que** les deux rubans de colle (4a, 4b) disposés sur différents côtés de support (3a, 3b) sur les bords de support (5a, 5b) s'opposant incluent entre eux dans la section une zone libre (F) du support (3), laquelle est constituée de préférence symétriquement à un axe longitudinal de bande (6).

10. Utilisation selon l'une quelconque des revendications 1 à 9, **caractérisée en ce que** le ruban de colle (4 ; 4a, 4b) est élaboré à partir d'une colle thermofusible, de préférence à base de caoutchouc.

11. Utilisation selon l'une quelconque des revendications 1 à 10, **caractérisée en ce qu'**un enrobage tubulaire flexible est élaboré, composé pour l'essentiel d'une bande adhésive entourant les câbles (1) de manière hélicoïdale et collée avec ceux-ci.

12. Utilisation selon la revendication 11, **caractérisée en ce que** la bande adhésive est collée au moyen du ruban de colle (4a, 4b) respectivement dans une zone de recouvrement (Ü) entre le côté supérieur (3a) d'une première spire (7₁) et le côté inférieur (3b) d'une deuxième spire voisine (7₂).

13. Utilisation selon la revendication 11 ou 12, **caractérisée en ce que** le ruban de colle (4a, 4b) est disposé dans la zone de recouvrement (Ü) entre un bord arrière (5b) de la première spire (7₁) et un bord avant (5a) de la deuxième spire voisine (7₂) de sorte que le côté intérieur de la bande adhésive tourné respectivement vers les câbles (1) est configuré essentiellement exempt de colle.
